**Europäisches Patentamt**

(19) **European Patent Office**

**Office européen des brevets**

(11) Numéro de publication: **0 131 504**
**B1**

(12) # FASCICULE DE BREVET EUROPÉEN

(45) Date de publication du fascicule du brevet:
**13.01.88**

(21) Numéro de dépôt: **84401342.5**

(22) Date de dépôt: **26.06.84**

(51) Int. Cl.⁴: **H 01 G 4/30,** H 01 G 13/06

(54) Procédé de fabrication de condensateurs-mères en continu.

(30) Priorité: **06.07.83 FR 8311259**

(43) Date de publication de la demande:
**16.01.85 Bulletin 85/3**

(45) Mention de la délivrance du brevet:
**13.01.88 Bulletin 88/2**

(84) Etats contractants désignés:
**BE DE GB IT**

(56) Documents cité:
**EP-A-0 027 650**
**DE-A-2 552 610**
**DE-A-2 824 802**
**GB-A-2 094 061**

(73) Titulaire: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Bernard, Daniel, THOMSON- CSF SCPI 173, bld Haussmann, F-75379 Paris Cedex 08 (FR)**

(74) Mandataire: **Ruellan- Lemonnier, Brigitte, THOMSON- CSF SCPI 19, avenue de Messine, F-75008 Paris (FR)**

## Description

La présente invention concerne un procédé de fabrication de condensateur-mère en continu.

On désigne habituellement par condensateur-mère ur condensateur sous forme d'un barreau parallélépipédique dont les flancs latéraux sont schoopés, obtenu par empilement à plat ou par bobinage sur une roue de grand diamètre de film de matière plastique métallisée, condensateur à partir duquel on fabrique un grand nombre de condensateurs individuels par découpage de celui-ci perpendiculairement aux flancs latéraux schoopés. Différents procédés permettant de réaliser des condensateurs-mères tels que décrits ci-dessus sont décrits par exemple dans les brevets français 879 280, 903 040, 1 051 464, 1 051 465 et 2 011 553.

Cette technologie exige pour obtenir une qualité et un rendement suffisant de pratiquer l'enroulement à partir de film métallisé de largeur identique avec une très grande précision. D'autre part, le développement des condensateurs miniaturisés impose que ces largeurs de film métallisé soient faibles de l'ordre de 5 mm, ce qui entraîne des marges non métallisées sur lesdits films qui doivent être faibles également afin de ne pas réduire le rendement capacitif des condensateurs ainsi formés.

Enfin, l'empilement ou le bobinage sur une roue de grand diamètre de film métallisé d'aussi faibles largeurs ne permet pas d'atteindre des hauteurs suffisantes pour permettre un bon rendement de fabrication, compte tenu du fait que dès que la hauteur du condensateur-mère augmente, il existe des risques non négligeables d'éffondrement dudit condensateur-mère.

Ces différentes exigences posées, on constate que les procédés actuellement connus ne permettent pas de les respecter simultanément. En effet, la métallisation des films et la confection des marges non métallisées sur ceux-ci (par les techniques bien connus de l'homme de métier de cache mobile ou de cache huile) sont réalisées dans un équipement de métallisation et les opérations de découpe et réenroulage des bandelettes en galettes sur un equipement de découpe. L'expérience montre qu'il est très difficile d'obtenir simultanément des films de largeur identique avec une marge étroite. Pour cela, en effet, il faudrait un accord parfait entre le positionnement des outils de margeages dans l'équipement de métallisation et le positionnement des outils de découpe dans l'équipement de découpe d'une part ainsi qu'une stabilité dimensionnelle parfaite du diélectrique au cours de ces différentes opérations effectuées sous contrainte mécanique et/ou thermique d'autre part. En particulier pour des couteaux de découpe fixes, on constate qu'il est nécessaire de tirer sur les films margés pour que les couteaux découpent tant bien que mal dans lesdites marges (plus la largeur totale du film augmente et plus les problèmes se posent).

Ces deux exigences n'étant pas remplies en pratique, il est nécessaire pour obtenir des films utilisables de faire certains sacrifices au niveau de la productivité:
- on réduit la largeur totale du film au niveau de la métallisation, de manière à éviter le cumul des erreurs mécaniques au niveau de l'empilement, des tolérances de positionnement, des outils de margeages et de découpe;
- on fixe en priorité la tolérance sur la largeur des films dont on déduit la largeur minimale des marges non métallisées. Autrement dit, les marges peuvent être supérieures à la largeur minimale ce qui induit une perte de capacité au niveau du condensateur ainsi formé (ou un volume plus élevé pour une capacité donnée).

Le document GB 2 094 061 décrit un procédé de fabrication de condensateurs-mères à partir de deux rouleaux de films métallisés. Des zones démétallisées sont réalisées sur chacun des rouleaux puis chaque rouleau est découpé en rubans. Les rubans sont bobinés de manière alternée sur une roue de manière à former une pluralité de condensateurs-mères. Les lignes de découpe sont décalées des zones métallisées de manière à former des bandes marginales de film métallisé qui constitueront des électrodes flottantes. Le bobinage conduit à la formation de condensateurs-mères adjacents sur une même roue.

Les condensateurs-mères formés par empilement ou bobinage sur une roue de grand diamètre sont généralement fabriqués à partir de ces films préalablement enroulés sur des galettes. Pour des largeurs étroites de films (de l'ordre de 5 mm) le diamètre maximal possible desdites galettes est très limité car on constate rapidement un risque élevé de "téléscopage" ou d'éclatement de celle-ci. Par conséquent, les rendements de fabrication diminuent en fonction de la fréquence de changement desdites galettes.

Le procédé selon l'invention permet d'éviter les inconvénients des procédés antérieurs. Dans ce but:

a) on réalise un film-mère de matière plastique métallisée sur l'une au moins de ses faces,

b) on découpe de manière connue en soi, le film-mère métallisé en films intermédiaires métallisés,

c) on réalise une démétallisation partielle de chaque film intermédiaire par déplacement de celui-ci devant un faisceau laser de type YAG divisé en une pluralité de faisceaux secondaires, ce mouvement s'exerçant de manière à obtenir une pluralité de marges non métallisées de même largeur, sensiblement parallèles aux bords du film intermédiaire, ayant entre elles une distance égale et prédéterminée,

d) on découpe en films individuels, sensiblement au milieu des marges et au milieu des parties comprises entre deux desdites marges, chaque film intermédiaire, les films individuels possédant chacun une zone demetallisée et une partie métallisée de largeur prédeterminee,

e) on écarte les films individuels les uns des autres d'une distance prédéterminée,

f) on réalise n condensateurs-mères côte à côte par bobinage sur une roue multi-jantes de grand diamètre, à raison d'un condensateur-mère par jante, à partir de deux desdits films intermédiaires, chaque condensateur-mère étant formé par l'empilement de deux films individuels, selon la technique de l'empilement à bords décalés et marges alternés,

g) on dépose un intercalaire sur chacun des n condensateurs-mères ainsi formés,

h) on réalise sur chaque intercalaire un nouveau condensateur-mère dont les bords sont sensiblement alignés avec ceux de l'étage précédent,

i) on réalise ainsi successivement m étages de condensateurs-mères,

j) on schoope les flancs latéraux de chaque ensemble de m étages de condensateurs-mères,

k) on sépare les condensateurs-mères les uns des autres de manière connue en soi.

L'étape de découpe peut ici être réalisée avec des moyens connus tels que les couteaux envisagés plus haut, dans la mesure où ces moyens de découpe (couteaux) sont positionnés à proximité du spot du faisceau laser de démétallisation, ce qui permet d'éviter les problèmes mentionnés plus haut.

On connaît, de DE 2 824 802, un procédé de démétallisation d'une feuille diélectrique métallisée pour condensateur. Selon ce procédé, le découpage de la feuille en films individuels est effectué sensiblement au milieu des marges démétallisées et au milieu des parties comprises entre deux marges démétallisées, la démétallisation s'effectuant au moyen d'un laser.

De préférence, l'étape d de découpe du film intermédiaire en n films individuels s'effectuera à l'aide d'un faisceau laser de type $CO_2$, divisé en faisceaux individuels positionnés par rapport aux faisceaux laser YAG de manière à obtenir n films individuels possédant chacun une marge de largeur voulue, les spots de démétallisation et de découpe sur le film intermédiaire étant à proximité l'un de l'autre.

Un mode particulièrement avantageux de réalisation du procédé selon l'invention consiste à n'utiliser dans les étapes g, h et i qu'un seul intercalaire pour chacun des m étages de condensateurs-mères, intercalaire commun aux n condensateurs-mères de l'étage. L'utilisation d'un intercalaire entre deux condensateurs-mères a été décrite dans EP 0 027 650. Dans ce cas, après obtention des n x m condensateurs-mères sur le support adéquat, on schoope globalement les deux flancs latéraux apparents de cet ensemble, puis on sépare parallèlement à ces flancs schoopés entre deux empilements successifs de n condensateurs-mères, de manière à créer deux ensembles de condensateurs-mères comportant un flanc latéral revêtu de métal de schoopage et un flanc latéral schoopé, puis on schoope l'autre flanc latéral de chaque ensemble et enfin on recommence les deux étapes précédentes de découpe et de schoopage si nécessaire de manière à obtenir n ensembles de m condensateurs-mères dont les deux flancs latéraux sont schoopés.

Une autre variante particulièrement avantageuse de l'invention consiste à réaliser à l'aide de chaque faisceau laser YAG subdivisé, une marge démétallisée commune à deux films individuels successifs d'un même film intermédiaire, et à découper à l'aide du faisceau laser de type $CO_2$ sensiblement au milieu de cette marge et entre deux marges successives et former ainsi deux films margés metallisés en n'utilisant qu'un seul faisceau laser de démétallisation (ledit faisceau créant alors une marge deux fois plus large). Suivant les cas, ainsi qu'on le verra par la suite, on peut approximativement diviser par deux (à une unite près) le nombre de faisceaux démétalliseurs par rapport au nombre de faisceaux de découpe.

Une autre variante avantageuse consiste à superposer deux films intermediaires (ou plus suivant la puissance des faisceaux lasers utilisés) et a démétalliser et découper lesdits films intermédiaires à l'aide d'une seule série de faisceaux: on divise encore sensiblement par deux le nombre de faisceaux utilisés et par quatre (au moins) en utilisant simultanément ces deux dernières variantes.

Concernant les caractéristiques du faisceau laser de type YAG permettant de démétalliser correctement un film diélectrique metallisé, tel qu'un film de polytéréphtalate d'éthylène métallisé à l'aluminium, ainsi que les caractéristiques de l'appareil utilisant ce faisceau laser et permettant de créer plusieurs faisceaux pour démétalliser simultanément un ou plusieurs films, on pourra se reporter plus particulièrement au FR-A-2 445 600, dont la description est incorporée ici à titre de référence.

Concernant les caractéristiques des faisceaux lasers permettant de découper un matériau tel qu'un film de polyester, on pourra par exemple se reporter à la revue "Zeitschrift für angewandte mathematik und physik" vol. 16 - 1965 - pages 138 à 145 ou à tout autre documentation connue de l'homme de métier.

L'invention sera mieux comprise à l'aide des exemples suivants, donnés à titre non limitatif, conjointement avec les figures qui représentent:

- les figures 1 à 3, une vue schématique de la métallisation d'un film-mère et sa division en films intermédiaires,

- les figures 4 et 5, la démétallisation des films intermédiaires et leur découpe en films individuels,

- la figure 6, une vue schématique de l'empilement de films individuels sur des supports intermédiaires, de manière à réaliser une pluralité de condensateurs-mères,

- les figures 7 à 16, la formation de condensateurs-mères à partir d'un ensemble de n x m condensateurs-mères bobinés simultanément côte à côte selon le procédé de l'invention,

- la figure 17, schématiquement les principaux moyens d'un appareil pour la mise en oeuvre du procédé selon l'invention.

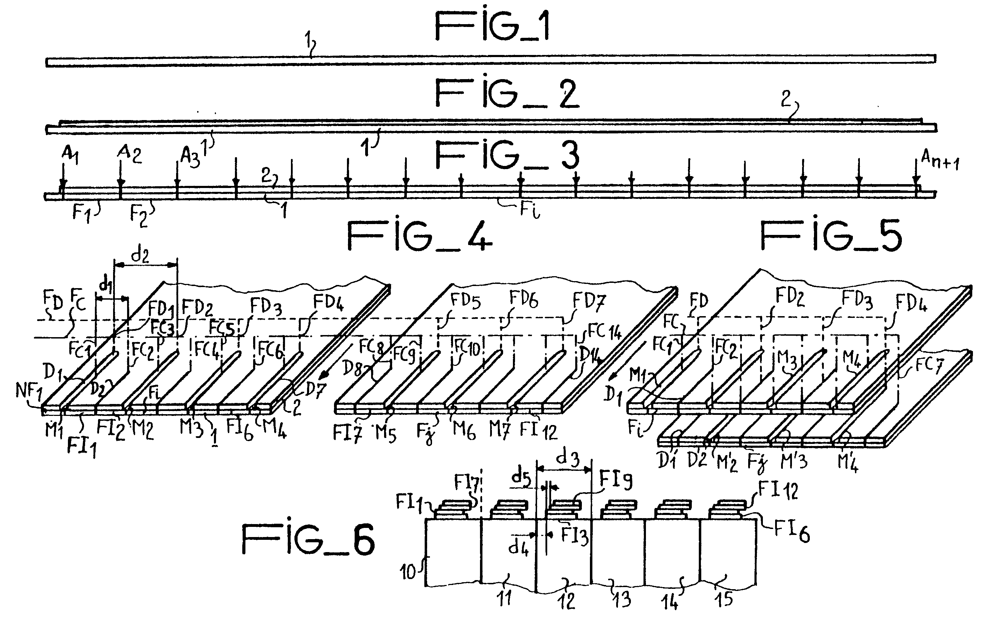

Les figures 1 à 3 sont une vue schématique du film de matière plastique de départ (figure 1) métallisé sur son ensemble (figure 2) (film diélectrique 1, métallisation 2) découpé en films intermédiaires $F_1$, $F_2$, etc... $F_n$ à l'aide de moyens de découpe habituels tels que des couteaux de décope, etc... $A_1$, $A_2$, $A_3$, ... $A_{n+1}$. On forme ainsi une pluralité de films intermédiaires de largeur sensiblement égale, un avantage du procédé étant que la découpe en films intermédiaires ne nécessite aucune précision et peut donc être effectuée de manière habituelle. Il faut noter que cette étape du procédé dans lequel on métallise de manière continue la surface totale d'au moins une face du diélectrique entraîne une augmentation notable de la productivité, du fait de l'augmentation de la largeur de la nappe à métalliser puisqu'il n'y a plus de problème de tolérance des outils de margeage et de découpe, et que l'on supprime également les caches mobiles de métallisation (qui nécessitent en outre un entretien important).

La découpe en films intermédiaires $F_1$, ... $F_n$ s'effectue sans aucune précision particulière sur des largeurs de l'ordre de 50 mm. Dans ces conditions, les galettes sur lesquelles ces films sont bobinés peuvent accumuler une longueur de film sensiblement deux fois supérieure à celle correspondant aux films individuels.

Les opérations suivantes du procédé selon l'invention sont représentées sur les figures 4 et 5 qui sont deux variantes possibles d'exécution de ce procédé.

Sur la figure 4, est représentée une première variante de réalisation des opérations de margeage découpe en films individuels et bobinage des condensateurs-mères sur une roue multi-jantes. Les opérations de margeage des films intermédiaires tels que $F_i$ et $F_j$ s'effectuent à l'aide d'un faisceau laser FD séparé en faisceaux laser de démétallisation individuels $FD_1$, $FD_2$, $FD_3$, $FD_4$, $FD_5$, $FD_6$ et $FD_7$. Le déplacement relatif de $F_i$ et $F_j$ devant ces différents faisceaux laser provoque la création de marges $M_1$, $M_2$, ... $M_7$. A l'aide d'un faisceau laser de découpe FC, lesdits films intermédiaires après démétallisation sont coupés par les sous-faisceaux issus du faisceau FC, respectivement les faisceaux $FC_1$, $FC_2$, $FC_3$, $FC_4$, ... $FC_{14}$. Le faisceau $FC_1$ vient découper le film intermédiaire $F_i$ au milieu de la marge $M_1$ créée par le faisceau de démétallisation $FD_1$, découpe effectuée le long de la ligne $D_1$ et engendrant à gauche de $D_1$ une portion de films NFI qui ne sera pas utilisée et à droite de $D_1$ un film individuel $FI_1$. A mi distance entre le milieu des marges $M_1$ et $M_2$, le faisceau de découpe $FC_2$ vient découper le long de la ligne $D_2$ le film intermédiaire $F_i$ tandis que le faisceau de découpe $FC_3$ découpe le film $F_i$ au milieu de la marge $M_2$ créée par le faisceau de démétallisation $FD_2$, le long de la ligne $D_3$. On créé de la même manière qu'indiquée ci-dessus les marges $M_3$ et $M_4$ pour le film $F_i$ et les

découpes à l'aide des faisceaux $FC_4$, $FC_5$, $FC_6$ et $FC_7$. De même, sur le film $F_j$, on créé les films individuels $FI_7$ jusqu'à $FI_{12}$ par démétallisation à l'aide de $FD_5$, $FD_6$ et $FD_7$ de manière à créer les marges $M_5$, $M_6$ et $M_7$ puis découpe à l'aide des faisceaux $FC_8$, $FC_9$, $FC_{10}$, $FC_{11}$, $FC_{13}$ et $FC_{14}$ le long ces lignes $D_8$, $D_9$, ... $D_{14}$.

Une autre manière plus avantageuse de réaliser la démétallisation et la découpe à l'aide des faisceaux laser de démétallisation et de découpe FD et FC consiste à opérer comme sur la figure 5 dans laquelle les films $F_i$ et $F_j$ sont superposés, sans précaution particulière. Le faisceau de démétallisation FD est séparé en autant de faisceaux qu'il est nécessaire pour réaliser les marges à la distance voulue en fonction de la largeur des films $F_i$ et $F_j$. Sur la figure 5, on a quatre faisceaux démétalliseurs $FD_1$, $FD_2$, $FD_3$ et $FD_4$ réalisant les marges respectivement des marges $M_1$, $M_2$ et $M'_2$, $M_3$ et $M'_3$, $M_4$ et $M'_4$. Le faisceau laser de découpe FC est fractionné en autant de faisceaux que nécessaire à savoir sur la figure 5 $FC_1$, $FC_2$, ... $FC_7$. Comme précédemment, ces faisceaux de découpe réalisent la découpe soit au milieu des marges telles que $M_1$, $M_2$, $M'_1$, $M'_2$ et $M'_3$, ..., soit à distance égale des bords desdites marges (découpe telle que $D_1$, $D'_1$, ...). Bien entendu, on peut également superposer plus de deux films intermédiaires et procéder de la manière décrite ci-dessus sans sortir du cadre de l'invention, dans la mesure où les puissances des faisceaux utilisés est suffisante, ce que l'homme de métier déterminera sans difficulté.

Dans le cas des figure 4 ou figure 5, on disposera généralement les faisceaux et sous-faisceaux correspondants FC et FD de manière fixe avec des distances inter-faisceaux bien déterminées et étalonnées à l'avance, ainsi qu'une position relative des faisceaux bien déterminée et à l'avance, et l'on fera défiler les films $F_i$ et $F_j$ devant lesdits faisceaux. Bien entendu, le défilement de ces films doit s'effectuer dans une direction parallèle au plan défini par deux sous-faisceaux correspondants tels que par exemple $FC_1$ et $FD_1$ (figure 4). Pour que le procédé soit continu, il faut de plus que cette direction coïncide approximativement avec la bordure des films $F_i$ et $F_j$.

Les couples de films intermédiaires ainsi margés et découpés (selon les différentes variantes ci-dessus) permettent des augmentations sensibles de rendement de fabrication: on a constaté en pratique qu'un tel procédé permettait de réaliser des marges de bonne qualité très étroites de l'ordre de 0,1 à 0,2 mm, ce qui permet un gain de capacité au niveau des films après bobinage de l'ordre de 30 %.

En plaçant à proximité l'un de l'autre les spots des faisceaux de démétallisation et de découpe sur le film intermédiaire correspondant, on s'affranchit des problèmes de déplacement latéral desdits films par rapport à ces faisceaux. On peut ainsi obtenir des films de largeur identique avec des marges étroites, identiques et régulières.

A titre d'exemple, le faisceau laser YAG utilisé avait un spot de largeur 400 microns et le faisceau laser $CO_2$ avait un spot de largeur 200 microns ce qui procurait une largeur finale pour chaque marge de 100 microns environ.

La vitesse de défilement du support diélectrique métallisé peut varier de 1 à 10 m/s suivant les puissances des faisceaux lasers utilisés. Par exemple, un faisceau laser $CO_2$ de 20 watts permet de découper un film de polytérephtalate d'éthylène de 8 microns d'épaisseur à la vitesse de 3 m/s pour un spot de diamètre 0,3 mm et une distance focale de l'ordre de 25 mm.

Après margeage et découpe, les différentes films individuels $Fl_1$, $Fl_2$,... passent individuellement sur des rouleaux à axes perpendiculaires à l'axe des roues de bobinage représentées schématiquement par les repères 10, 11, 12, 13, 14 et 15 sur la figure 6. Les axes de ces rouleaux sont montés sur un système micrométrique réglable permettant d'ajuster avec précision la position de chacun des films individuels sur lesdites roues de bobinage. On réalise alors l'empilement des films par exemple par bobinage sur des roues de grand diamètre, roues disposées de manière adjacente, telles que 10, 11, ..., 15. A l'aide du système micrométrique réglable disposé sur le rouleau sur lequel passe chaque film tel que $Fl_1$, $Fl_2$, ..., on réalise un décalage latéral d'une distance $d_5$ sur la figure 6 des extrémités de deux films superposés. Ces films tels que $Fl_1$ et $Fl_7$ ont respectivement une marge à droite et une marge à gauche et sont empilés avec ledit décalage $d_5$. La largeur de la roue correspondante de bobinage, $d_3$, est bien entendu supérieure à la largeur du condensateur-mère formé par empilage, de manière à laisser une distance $d_4$ entre le bord de la roue 12 et le bord correspondant d'un film tel que $Fl_3$. Cette distance d'est en particulier nécessaire pour permettre l'introduction au-dessus de chaque condensateur-mère d'un intercalaire débordant tel que décrit par exemple dans le brevet français 2 011 553.

Bien entendu, l'incidence des faisceaux lasers sur les films intermédiaires se fera de préférence sensiblement dans un plan perpendiculaire au plan du film intermédiaire, et parallèle à la direction de défilement dudit film.

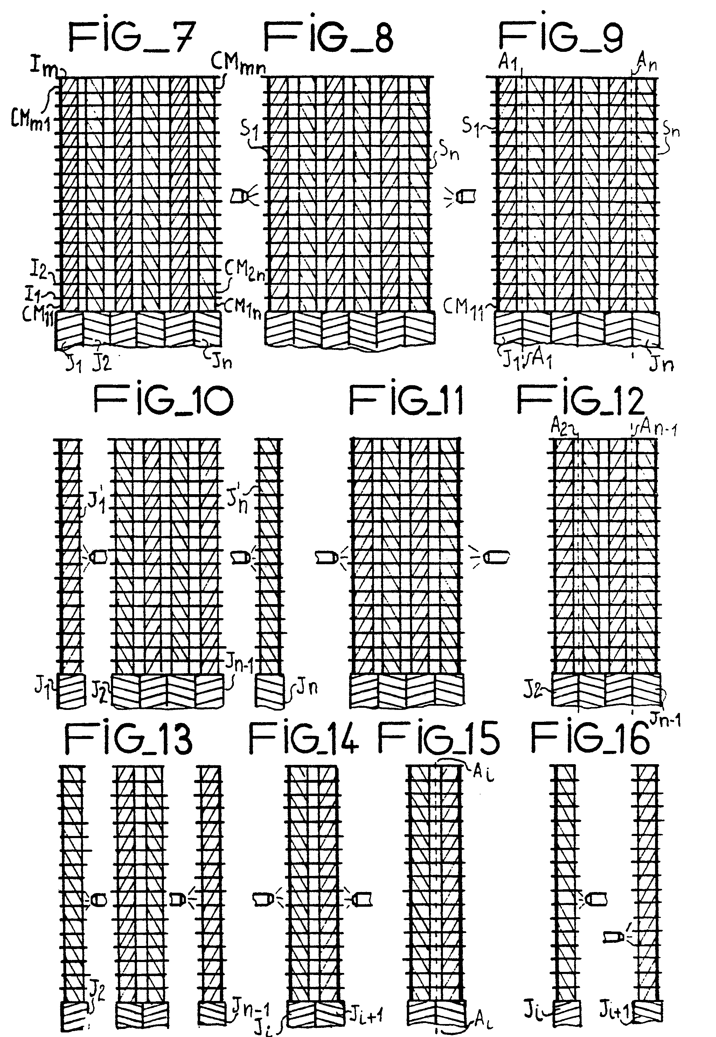

Les figures 7 à 16 représentent des vues schématiques d'un ensemble de n roues de bobinage adjacentes sur lesquelles on a empilé m condensateurs-mères. Les roues $J_1$, $J_2$, ... $J_n$ portent respectivement un premier condensateur-mère $CM_{11}$, $CM_{12}$, ... $CM_{1n}$, sur l'ensemble duquel est disposé un seul intercalaire $I_1$. Selon ce mode préférentiel de réalisation de l'invention, en effet, on n'utilise qu'un seul intercalaire ce qui simplifie bien entendu la machine permettant l'introduction de cet intercalaire d'une part, et ce qui de plus permet de donner une meilleure stabilité à l'ensemble des n condensateurs-mères d'un même étage les rendant solidaires les uns des autres par l'intermédiaire de cet intercalaire débordant. On réalise ainsi m étages successifs de condensateurs-mères en intercalant m intercalaires uniques $I_1$, ... $I_m$. L'ensemble ainsi formé de n x m condensateurs-mères est schoopé sur ses flancs latéraux $S_1$ et $S_n$ puis on sépare, par exemple par sciage, les m condensateurs-mères disposés au-dessus de la roue $J_1$ et les m condensateurs-mères disposés au-dessus de la roue $J_n$, le long respectivement des lignes $A_1$, $A_1$ et $A_n$, $A_n$. Du fait de la présence des schoopages latéraux respectivement $S_1$ et $S_n$, lesdits empilements malgré la faible largeur de chaque condensateur-mère et leur hauteur importante tiennent en équilibre. Après séparation des roues $J_1$, $J_n$ de l'ensemble des autres roues, on schoope les flancs latéraux $S'_1$, $S'_n$ desdits ensembles disposés sur les roues $J_1$, $J_n$, la séparation des condensateurs-mères disposés respectivement sur ces roues s'effectuant de manière connue en soi par sciage radial. Les figures 11 à 16 montrent la suite des opérations effectuées sur l'ensemble des roues $J_2$ à $J_{n-1}$, ensemble d'opérations identiques à celles décrites sur les figures 7 à 10 incluse. Dans le cas représenté sur ces figures 7 à 16, le nombre n est égal à 6 (nombre pair). Dans le cas où n est impair, le déroulement des opérations peut être identique à celui décrit sur lesdites figures, jusqu'à l'obtention de trois ensembles côte à côte de m condensateurs-mères. Il convient alors de séparer ces trois ensembles de condensateurs-mères en, d'une part un ensemble de m condensateurs-mères disposés sur une roue dont on schoope l'autre flanc latéral, et d'autre part un second ensemble de deux ensembles de m condensateurs-mères dont on schoope également le flanc latéral ainsi mis à nu puis on se retrouve dans le cas précédent.

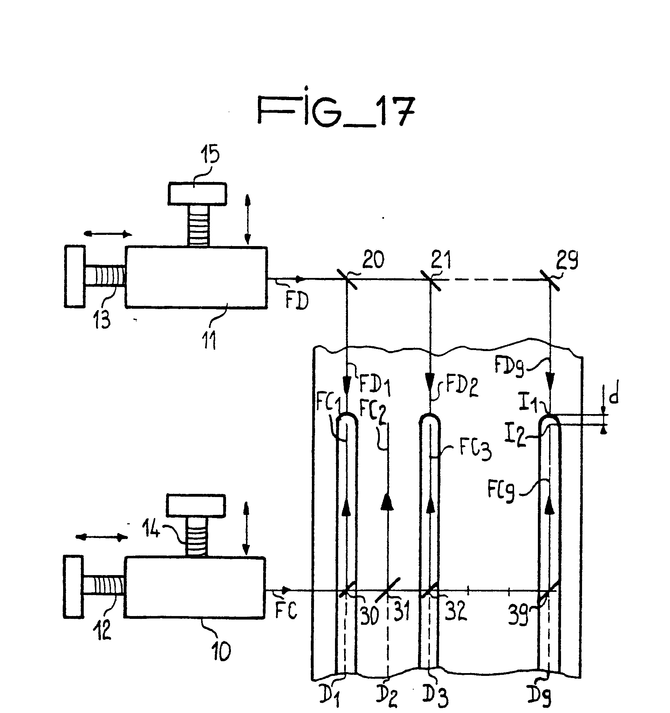

La figure 17 représente schématiquement les principaux moyens d'un appareil pour la mise en oeuvre du procédé selon l'invention. Le faisceau démétalliseur FD de type laser YAG est issu d'un boîtier 11 comportant deux vis de réglage transversale 13 et longitudinale 15, servant aux déplacements dans ces deux directions de l'ensemble du boîtier 15 et des miroirs semi-réfléchissants 20, 21, ... 29 (le dernier étant totalement réfléchissant) qui lui sont solidaires. La distance entre ces miroirs, leur orientation peut être réglée, indépendamment les uns des autres par des moyens non représentés sur la figure. On règle ainsi, de la manière voulue, les points d'impact tels que $I_1$ des faisceaux démétalliseurs $FD_1$, $FD_2$, ... $FD_9$ (en nombre quelconque).

De la même manière, le faisceau FC de découpe de type laser $CO_2$ issu du boîtier 10 est subdivisé en faisceaux parallèles à l'aide des miroirs semi-réfléchissants 30, 31, 32,... 39 (ce dernier est totalement réfléchissant). Ces miroirs, réglables indépendamment l'un de l'autre par des moyens non représentés sur la figure, sont solidaires du boîtier 11, le déplacement de l'ensemble étant réglé par les vis 12 et 14 (10 peut être déplacé indépendamment des miroirs par des moyens non représentés sur la figure). On règle ainsi, sans difficulté, le point d'impact tel que $I_2$ des faisceaux de découpe tels que $FC_9$. On ajoute alors la distance d entre les impacts $I_1$ et $I_2$ des faisceaux de la manière indiquée plus haut. On obtient une pluralité de films margés et découpés selon $D_1$, $D_2$, $D_3$,... $D_9$ ainsi qu'expliqué plus haut.

## Revendications

1. Procédé de fabrication de condensateurs-mères comprenant les étapes suivantes:

a) réalisation d'un film-mère de matière plastique métallisé (1, 2) sur l'une au moins de ses faces,

b) découpe, de manière connue en soi, du film-mère métallise en films intermédiaires métallisés $(F_i)$,

c) réalisation d'une démétallisation partielle de chaque film intermédiaire $(F_i, F_j)$ par déplacement de celui-ci devant un faisceau laser (FD) de type YAG divisé en une pluralité de faisceaux secondaires $(FD_1, ... FD_7)$, ce déplacement s'exerçant de manière à obtenir une pluralité de marges $(M_1,... M_4)$ de même largeur, sensiblement parallèles aux bords du film intermédiaire $(F_i, F_j)$, ayant entre elles une distance $(d_2)$ sensiblement égale et prédeterminée,

d) découpe en films individuels réalisée sensiblement au milieu des marges $(M_1, ..., M_4)$ et au milieu des parties comprises entre deux desdites marges de chaque film intermédiaire $(F_i, F_j)$, en films individuels (FI) possédant chacun une zone demetallisée et une partie métallisée de largeur prédéterminée $(d_1)$,

e) écartement des films individuels les uns des autres d'une distance prédéterminée $(d_3)$,

f) réalisation de n condensateurs-mères (CM) côte à côte par bobinage sur une roue multi-jantes de grand diamètre, à raison d'un condensateur-mère par jante à partir de deux desdits films intermédiaires $(F_i F_j)$ chaque condensateur-mère étant formé par l'empilement de deux desdits films individuels selon la technique de l'empilement à bords décalés et marges alternées,

g) dépôt d'un intercalaire sur chacun des n condensateursmères ainsi formés,

h) réalisation sur chaque intercalaire d'un nouveau condensateur-mère dont les bords sont sensiblement alignés avec ceux de l'étage précédent,

i) réalisation successive de m étages de condensateurs-mères $(C_n)$,

j) schoopage des flancs latéraux $(S_1, S_n)$ de chaque ensemble de m étages de condensateurs-mères (CM),

k) séparation les condensateurs-mères (CM) les uns des autres, de manière connue en soi.

2. Procédé selon la revendication 1, caractérisé en ce que dans l'étape g), les intercalaires déposés sur chaque condensateur-mère sont remplacés par un intercalaire commun (I) sur les n condensateurs-mères d'un même étage.

3. Procédé selon la revendication 2, caractérisé en ce que, après introduction de l'intercalaire commun (I), l'étape j du procédé consiste à schooper globalement les deux flancs latéraux apparents $(S_1, S_n)$ de l'ensemble, puis à séparer parallèlement aux flancs latéraux schoopés $(S_1, S_n)$, entre deux empilements successifs de n condensateurs-mères (CM), de manière a créer deux ensembles de condensateurs-mères (CM) comportant un flanc latéral revêtu de métal de schoopage $(S_1, S_n)$ et un flanc latéral non schoopé $(S'_1, S'_n)$ puis à schooper l'autre flanc latéral $(S'_1, S'_n)$ de chacune ensemble, enfin à recommencer les deux étapes précédentes de découpe et de schoopage, si nécessaire, de manière à obtenir n ensembles de m condensateurs-mères (CM) dont les deux flancs latéraux sont schoopés.

4. Procédé selon l'une des revendications 1 à 3, caractérisé en ce que l'étape d de découpe du film intermédiaire (F) en films individuels (FI) s'effectue à l'aide d'un faisceau laser (FC) de type $CO_2$, divisé en faisceaux individuels.

5. Procédé selon la revendication 4, caractérisé en ce que les faisceaux lasers de démétallisation (FD) et de découpe (FC) des films intermédiaires (F) sont sensiblement situés dans un plan perpendiculaire au plan du film intermédiaire (F) et parallèle à la direction de défilement dudit film (f).

## Patentansprüche

1. Verfahren zur Herstellung von Mutterkondensatoren mit den folgenden Schritten:

a) Herstellen eines Mutterfilms aus auf mindestens einem seiner Seiten metallisierten Plastikmaterial (1, 2),

b) Zerschneiden, auf an sich bekannte Weise, des metallisierten Mutterfilms in metallisierte Zwischenfilme $(F_i)$,

c) Herstellen einer partiellen Entmetallisierung jedes Zwischenfilms $(F_i, F_j)$ durch Bewegen des Zwischenfilms vor einem Laserstrahl (FD) vom YAG-Typ, der in mehrere Sekundärstrahlen $(FD_1. .. FD_7)$ unterteilt ist, wobei die Bewegung so ausgeführt wird, daß mehrere Ränder $(M_1 ... M_4)$ erhalten werden, die die gleich breit sind, im wesentlichen parallel zur Kante des Zwischenfilms $(F_i, F_j)$ sind, und untereinander einen im wesentlichen gleichen und vorbestimmten Abstand $(d_2)$ haben,

d) Zerschneiden in Einzelfilme im wesentlichen auf Höhe der Ränder $(M_1 ... M_4)$ und auf Höhe der zwischen den beiden Rändern liegenden Teile jedes Zwischenfilms $(F_i, F_j)$, wobei die Einzelfilme (FI) jeweils einen entmetallisierten Bereich und einen metallisierten Abschnitt vorbestimmter Breite ($d_1$) aufweisen,

e) Verschieben der Einzelfilme zueinander um einen vorbestimmten Abstand ($d_3$),

f) Herstellen von n Mutterkondensatoren (CM) nebeneinander durch Wickeln auf eine Walze mit vielen Felgen und großem Durchmesser, so daß von zwei Zwischenfilmen ($F_i$, $F_j$) ausgehend ein Mutterkondensator pro Felge entsteht, wobei jeder Mutterkondensator durch Übereinanderschichten der beiden Einzelfilme nach der Schichttechnik mit verschobenen Kanten und miteinander abwechselnden Rändern gebildet wird,

g) Auftragen einer Zwischenschicht auf jeden der n so gebildeten Mutterkondensatoren,

h) Herstellen eines neuen Mutterkondensators auf jeder Zwischenschicht, dessen Kanten im wesentlichen mit denjenigen der vorherigen Lage fluchten,

i) sukzessives Herstellen der m Lagen der Mutterkondensatoren ($C_n$),

j) Schoopieren der Seitenflächen ($S_1$, $S_n$) jeder Menge aus m Lagen von Mutterkondensatoren (CM),

k) Trennen der Mutterkondensatoren (CM) voneinander, auf an sich bekannte Weise.

2. Verfahren nach Anspruch 1, dadurch gekennzeichnet, daß im Schritt g) die auf jeden Mutterkondensator aufgebrachten Zwischenschichten durch eine gemeinsame Zwischenschicht (I) auf den n Mutterkondensatoren derselben Lage ersetzt werden.

3. Verfahren nach Anspruch 2, dadurch gekennzeichnet, daß nach dem Einführen der gemeinsamen Zwischenschicht (I) der Verfahrensschritt j darin besteht, die beiden offenliegenden Seitenflächen ($S_1$, $S_n$) der Gesamtheit global zu schoopieren, dann Parallel zu den schoopierten Seiten ($S_1$, $S_n$) zwischen zwei aufeinanderfolgenden Schichtungen der n Mutterkondensatoren (CM) so zu trennen, daß zwei Mengen Mutterkondensatoren (CM) hergestellt werden, die eine mit Schoopiermetallen bedeckte Fläche ($S_1$, $S_n$) und eine nicht schoopierte Seitenfläche ($S'_1$, $S'_n$) enthalten, dann die andere Seitenfläche ($S'_1$, $S'_n$) jeder Menge zu schoopieren und schließlich die beiden vorigen Schritte des Schneidens und des Schoopierens, falls nötig, zu wiederholen, um n Mengen von m Mutterkondensatoren (CM) zu erhalten, deren beide Seitenflächen schoopiert sind.

4. Verfahren nach einem der Ansprüche 1 bis 3, dadurch gekennzeichnet, daß der Schritt d des Schneidens des Zwischenfilmes (F) in Einzelfilme (Fl) mit Hilfe eines Laserstrahls (FC) vom $CO_2$-Typ durchgeführt wird, der in Einzelstrahlen unterteilt ist.

5. Verfahren nach Anspruch 4, dadurch gekennzeichnet, daß die Laserstrahlen zum Entmetallisieren (FD) und Schneiden (FC) des Zwischenfilms (F) im wesentlichen in einer Ebene gelegen sind, die senkrecht zur Ebene des Zwischenfilms (F) und parallel zur Vorbeibewegungsrichtung des Films (F) ist.

## Claims

1. Method of producing mother capacitors comprising the following steps:

a) forming a mother film of plastic material metallized (1,2) on at lest one of its faces,

b) cutting the metallized mother film into intermediate metallized films ($F_i$) in a manner known per se,

c) partially removing the metallization of each intermediate film ($F_i$, $F_j$) by passing the latter in front of a laser beam (FD) of YAG type divided into a plurality of secondary beams ($FD_1$ ... $FD_7$), the movement being performed in such a manner that a plurality of margins ($M_1$, ... $M_4$) of same width is obtained which are substantially parallel to the edges of the intermediate film ($F_i$, $F_j$), spaced from each other at substantially equal and predetermined spacings ($d_2$),

d) cutting into individual films substantially centrally of the margins ($M_1$, ... $M_4$) and centrally through the portions comprised between two of said margins of each intermediate film ($F_i$, $F_j$), the individual films (Fl) each comprising a zone with removed metallization and a metallized portion of predetermined width ($d_1$),

e) spreading the individual films from each other by a predetermined distance ($d_3$),

f) forming n mother capacitors (CM) in side by side relationship by coiling onto a multi-rim wheel of large diameter, one mother capacitor per rim, from two of said intermediate films ($F_i$, $F_j$), each mother capacitor being formed by the superposition of two of said individual films using the technique of piling with shifted edges and alternating margins,

g) deposition of a shim on each of the thus formed n mother capacitors,

h) forming a new mother capacitor on each shim the edges of which are substantially aligned with those of the preceding layer,

i) successive forming of m layers of mother capacitors ($C_n$),

j) metallizing the lateral flanges ($S_1$, $S_n$) of each set of m layers of mother capacitors (CM),

k) separating the mother capacitors (CM) from each other in a manner known per se.

2. Method according to claim 1, characterized in that in the step g the shims deposited on each mother capacitor are replaced by a common shim (I) on the n mother capacitors of the same layer.

3. Method according to claim 2, characterized in that, after introduction of the common shim (I), the step j of the method consists in generally metallizing the two lateral apparent flanges ($S_1$, $S_n$) of the set, then separating in parallel to the metallized lateral flanges ($S_1$, $S_n$) between two successive piles of n mother capacitors (CM), in a manner to provide two sets of mother capacitors (CM) comprising a lateral flange coated with

contacting metal ($S_1$, $S_n$) and an unmetallized lateral flange ($S'_1$, $S_n$), then metallizing the other lateral flange ($S'_1$, $S'_n$) of each set, and finally repeating the two preceding cutting and metallizing steps if required in a manner to obtain n sets of m mother capacitors (CM) the two lateral flanges of which are meta ized.

4. Method according to any of claims 1 to 3, characterized in that the step d of cutting the intermediate film (F) into individual films (FI) is performed by menas of a laser (FC) of $CO_2$ type, divided into individual beams.

5. Method according to claim 4, characterized in that the laser beams for removing the metallization (FD) from and for cutting (FC) the intermediate films (F) are substantially located in a plane perpendicular to the plane of the intermediate film (F) and parallel to the moving direction of said film (F).

FIG_1

FIG_2

FIG_3

FIG_4

FIG_5

FIG_6

0 131 504

FIG_7   FIG_8   FIG_9

FIG_10   FIG_11   FIG_12

FIG_13   FIG_14   FIG_15   FIG_16

3

# FIG_17